(19) Europäisches Patentamt
European Patent Office
Office européen des brevets

(11) **EP 2 992 302 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(21) Anmeldenummer: **14717738.0**

(22) Anmeldetag: **11.04.2014**

(51) Int Cl.:
*G01F 1/66* *(2006.01)*      *G01F 15/00* *(2006.01)*

(86) Internationale Anmeldenummer:
**PCT/EP2014/057406**

(87) Internationale Veröffentlichungsnummer:
**WO 2014/177365 (06.11.2014 Gazette 2014/45)**

(54) **ULTRASCHALLWANDLER UND ULTRASCHALL-DURCHFLUSSMESSGERÄT**

ULTRASONIC TRANSDUCER AND ULTRASONIC FLOW METER

TRANSDUCTEUR ULTRASONORE ET DÉBITMÈTRE À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2013 DE 102013104542**

(43) Veröffentlichungstag der Anmeldung:
**09.03.2016 Patentblatt 2016/10**

(73) Patentinhaber: **Endress+Hauser Flowtec AG**
**4153 Reinach (BL) (CH)**

(72) Erfinder:
• **WIEST, Achim**
**79576 Weil am Rhein (DE)**
• **BERGER, Andreas**
**79686 Hasel-Glashütten (DE)**
• **GRUNWALD, Sascha**
**79585 Steinen (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**EP-B1- 0 974 814      DE-A1-102011 079 250**
**DE-C1- 4 230 773**

**Beschreibung**

Die vorliegende Erfindung betrifft ein Ultraschallwandler nach dem Oberbegriff des Anspruchs 1 und ein Ultraschall-Durchflussmessgerät.

Im Bereich der Ultraschallwandler-Aufbauten ist bereits eine Vielzahl von verschiedenen Aufbauten und Schichtabfolgen bekannt.

Die gattungsgemäße EP 0 974 814 B1 beschreibt ein Koppelelement mit einer Auflage bzw. Kontaktfläche, welches eine Ausnehmung zur Aufnahme eines Piezoelements aufweist. Zwischen dem Koppelelement und dem Piezoelement ist eine Metallscheibe angeordnet. Diese Metallscheibe ist in einer zur Auflage auf einer zur Auflagefläche schrägen Ebene, welche zugleich eine Grundfläche der Ausnehmung bildet, aufgeklebt. Diese Konstruktion hat sich grundlegend bewährt und besticht insbesondere durch seine hohe Temperatur-Wechselbeanspruchung. Allerdings hat sich gezeigt zwischen der Metallscheibe und dem Koppelelement hohe Impedanzunterschiede auftreten.

Die Patentschrift DE4230773C1 offenbart einen Ultraschallwandler mit einem Gehäuse und einem Keramikschwinger, wobei eine dem Medium zugewandte Seite des Gehäuses durch eine Anpaßschicht vom Keramikschwinger getrennt ist. Der Keramikschwinger liegt dabei aus Distanzstücken auf, welche einen Mindestabstand zwischen dem Keramikschwinger und der dem Medium zugewandten Seite des Gehäuses sicherstellt.

Die Offenlegungsschrift DE102011079250A1 zeigt ein Ultraschall-Durchflussmessgerät mit einer Anordnung von Ultraschallwandlern.

Daher ist es Aufgabe der vorliegenden Erfindung ein Koppelelement und einen Ultraschallwandler bereitzustellen, welche die vorbeschriebenen Probleme reduzieren und dabei nach wie vor eine hohe Temperaturwechselbeständigkeit gewährleisten.

Die Erfindung löst diese Aufgabe durch einen Ultraschallwandler mit den Merkmalen des Anspruchs 1, wobei der Ultraschallwandler ein Koppelelement aufweist in welchem eine Abfolge aus einem Piezoelement, einer Auflagenscheibe und einer Anpassungsschicht angeordnet sind. Zur Erleichterung der Positionierung der Auflagenscheibe ist dabei das Koppelelement mit Anschlägen analog zu den Merkmalen des Anspruchs 1 ausgestattet.

Erfindungsgemäß weist ein Koppelelement für einen Ultraschallwandler eine erste Ausnehmung auf. Diese Ausnehmung ist beispielsweise eine Schrägbohrung, welche als Sackloch ausgebildet ist. Endständig weist die Ausnehmung eine Grundfläche auf. Diese Grundfläche ist vorzugsweise im Wesentlichen eben ausgebildet, kann allerdings zur Vergrößerung der Oberfläche und zur besseren Anhaftung einer auf der Grundfläche aufzubringenden Vergussmasse, Riffelungen, Prägungen und dergleichen aufweisen. Die besagte erste Ausnehmung ist zur Anordnung eines Piezoelementes vorgesehen.

In die besagte Grundfläche wird das Ultraschallsignal, insbesondere senkrecht zur Grundfläche, eingeleitet, welches zuvor durch ein Piezoelement erzeugt und ggf. über weitere Zwischenschichten, wie z.B. eine Metallscheibe zum Koppelelement hin übertragen wird.

Das Koppelelement weist erfindungsgemäß innerhalb der Ausnehmung einen oder mehrere Anschläge auf. Diese Anschläge dienen zur Positionierung einer Auflagenscheibe oder in einer weniger bevorzugten Ausführungsvariante des Piezoelements direkt, die aufgrund der Ausrichtung der Anschlagsflächen vorzugsweise planparallel zu der besagten Grundfläche ausgerichtet werden. Hierfür weist ein Anschlag eine Anschlagsfläche auf, auf der beispielsweise die Auflagenscheibe oder das Piezoelement aufliegt und die sich entlang einer Ebene erstreckt. Die besagte Ebene ist parallel zur Grundfläche der ersten Ausnehmung angeordnet und von dieser beabstandet. Diese Ebene und die Grundfläche bilden zusammen mit der Randseite der Ausnehmung ein Raum aus, welcher zur Aufnahme von Material für eine akustische Anpassungsschicht bestimmt ist.

Aufgrund dieser geometrischen Vorgaben kann in den zuvor beschriebenen Koppelkörper auf einfache Weise eine Anpassungsschicht eingebracht werden, die zusätzlich zur Auflagenscheibe eine verbesserte Impedanzanpassung gegenüber dem Piezoelement und der Auflagenscheibe ermöglicht. Die Positionierung der Auflagenscheibe und/oder des Piezoelements auf der Anpassungsschicht aus Vergussmasse ist durch die Anschläge vorgegeben und erfolgt parallel zur Grundfläche der ersten Ausnehmung.

Das Koppelelement weist eine erste Ausnehmung auf, wobei in dieser ersten Ausnehmung ein Piezoelement angeordnet ist. Die erste Ausnehmung weist zudem eine endständige Grundfläche auf. In diese Grundfläche welche wird, vorzugsweise senkrecht dazu, kann ein durch das Piezoelement erzeugtes Ultraschallsignal eingeleitet werden.

In der ersten Ausnehmung ist zudem eine Auflagescheibe zur Auflage des Piezoelements vorgesehen, welche vorzugsweise eine Auflagenscheibe ist. Alternativ kann diese Scheibe auch aus einem anderen geeigneten Material mit entsprechender Impedanz, thermischer Ausdehnung und mechanisch ausgleichender Wirkung aus z.B. Keramik, Glass oder einem Verbundmaterial aus mehreren Materialen bestehen, deren akustische Wirkung als homogen erscheint bzw. deren Inhomogenitäten klein gegen die Wellenlänge sind)

Die Auflagescheibe ermöglicht eine Auflage des Piezoelements planparallel zur endständigen Grundfläche des Koppelelements. Dabei ist die Auflagenscheibe zur Verminderung von thermischen Spannungen am Piezoelement.

Die Auflagescheibe weist vorzugsweise eine Schichtdicke kleiner als $1/8\,\lambda$ (lambda), vorzugsweise kleiner $1/16$

λ auf. Sie übernimmt nicht die Funktion einer akustischen Anpassung sondern lediglich des thermischen Ausgleichs gegenüber den darunter angeordneten Schichten - respektive dem Koppelelement und einer Anpassungsschicht. Die thermische Ausgleichsscheibe weist dabei vorzugsweise einen thermischen Ausdehnungskoeffizienten von kleiner 30 ppm/K, besonders bevorzugt kleiner 25 ppm/K auf. Die Auflagescheibe sollte möglichst eben ausgebildet sein, damit es zu keinem Winkelversatz zwischen der Ebene der Grundfläche gegenüber der Ebene des Piezoelements kommt. Die Ebenheit der Auflagescheibe beträgt dabei vorzugsweise weniger als 1/16 , insbesondere weniger als 1/32 lambda Auf der vom Koppelelement weggerichteten Oberseite der Auflagescheibe ist das Piezoelement angeordnetAuflagenscheibe. Die Anordnung kann direkt auf der Auflagenscheibe, erfolgen, wobei die Auflagenscheibe in einer bevorzugten Ausführungsvariante das Piezoelement zudem gegen seitliches Verrutschen sicher und das Piezoelement zentriert. Alternativ kann zwischen der Auflagenscheibe und den Piezoelement auch noch eine Schicht Koppelfett oder ähnliche schallübertragende fluide Koppelmedien aufgebracht sein, welche ggf. Unebenheiten zwischen Piezoelement und Auflagenscheibe ausgleichen.

Die Auflagenscheibe und die Grundfläche begrenzen dabei zusammen mit der Randseite der Ausnehmung einen Raum begrenzen, in welchem im Unterschied zur bereits bekannten Klebstoffschicht eine Anpassungsschicht zur Anpassung zwischen den akustischen Impedanzen der Auflagenscheibe und des Koppelelements angeordnet ist. Ohne eine Anpassung der akustischen Impedanzen kommt es zu einer nicht reflexionsfreien Übertragung der Schallenergie und zu einer Verkleinerung des Signals. Durch die Anpassungsschicht wird eine Impedanztransformation vorgenommen, so dass in einem eingeschränkten Frequenzbereich eine weitestgehend reflexionsfreie Schallübertragung erfolgen kann. Diese Anpassungsschicht besteht vorzugsweise aus einem ausgehärteten Kunststoffmaterial, insbesondere einer Vergussmasse. Diese kann vorzugsweise mindestens Dicke von zumindest $3/8\lambda$ (lambda), vorzugsweise jedoch $\lambda/4$ oder ein Vielfaches von $\lambda/4 + n*\lambda/2$, wobei n ein ganzzahliges Vielfaches ist, aufweisen. Bei den Abgaben handelt sich dabei um eine Schichtdicke, welche der Wellenlänge des Ultraschallsignals in dem Material der Anpassungsschicht entspricht.

Während eine dünne Klebstoffschicht keine effektive Anpassung der Impedanzen der Auflagenscheibe und des Koppelelement ermöglicht, wird nunmehr erfindungsgemäß zwischen der Auflagenscheibe und der Grundfläche ein Raum bereitgestellt, in welchem eine Anpassungsschicht eingebracht ist, deren akustische Impedanz zwischen den akustischen Impedanzen der Auflagenscheibe und der Grundfläche liegt.

Weitere vorteilhafte Ausgestaltungen der Erfindung sind Gegenstand der Unteransprüche.

Es ist von Vorteil, wenn die Anpassungsschicht eine $\lambda/4$-Anpassungsschicht ist. Dieser Begriff ist dem Fachmann geläufig. Es handelt sich dabei um eine Schichtdicke, welche einem Viertel der Wellenlänge des Ultraschallsignals in dem Material der Anpassungsschicht entspricht, wobei die Schichtdicke je nach akustischer Anforderung an die Bandbreite auch um $\pm$ 25% von diesem Wert abweichen kann. Im Gegensatz zu einer Typischen Klebstoffschicht, deren Schichtdicke bei unter 3/8 lambda liegt.

Es ist von Vorteil, wenn das Koppelelement eine zweite Ausnehmung aufweist, welche über einen Überlaufkanal mit der ersten Ausnehmung verbunden ist. Diese zweite Aufnehmung nimmt bei der Herstellung, z.B. beim Andrücken der Auflagenscheibe auf die viskose Vergussmasse oder beim Einspritzen von Vergussmasse in den besagten Raum zwischen der Grundfläche und der Auflagenscheibe, überschüssige Vergussmasse auf, die seitlich über den Überlaufkanal in die zweite Ausnehmung überführt wird.

Es ist von Vorteil der eine Anschlag als zumindest ein Steg ausgebildet ist, welcher randseitig in die erste Ausnehmung hineinragt. Dieser Steg ist vorzugsweise umlaufend und dient zur planparallelen Positionierung der Auflagenscheibe gegenüber der Grundfläche der ersten Ausnehmung. Ein derartiger Steg ist beispielsweise durch Fräsen realisierbar und verringert dadurch die Herstellzeit.

Es ist insbesondere von Vorteil die mehreren Anschläge als eine Mehrzahl von Stegen ausgebildet sind, welche randseitig in die erste Ausnehmung hineinragen und deren Anschlagsflächen in der Ebene liegen. Gegenüber einem umlaufenden Steg wird bei dieser bevorzugten Ausführungsvariante ein größerer Raum für die Anpassungsschicht zur Verfügung gestellt, wodurch randseitige Reflexionen, also am Rand der ersten Ausnehmung, des Ultraschallsignals im größeren Maße verhindert werden.

Der Anschlag kann vorteilhaft als einer oder mehrere Abstandshalter ausgebildet sein, welche aus der Grundfläche der ersten Ausnehmung hervorstehen. Die Abstandshalter verhindern vorteilhaft eine zentrale Verformung der Auflagenscheibe.

Somit wird eine möglichst hohe Ebenheit der Auflagenscheibe erreicht. Es ist von Vorteil, wenn der oder die Anschläge integraler Bestandteil des Koppelelements sind. Somit wird die Parallelität der Vergussschicht möglichst hoch. Diese können beispielsweise herausgefräst werden. Impedanzeinflüsse durch weitere Materialien werden zudem vorteilhaft vermieden.

Der oder die Stege weisen erfindungsgemäss einen Hinterstich auf. Dadurch nimmt einerseits der zur Verfügung stehende Raum für die Anpassungsschicht weiter zu. Darüber hinaus verbessert sich das Schrumpfungsverhalten der Vergussmasse der Anpassungsschicht bei deren Aushärtung. Ebenfalls werden, durch Temperaturwechsel verursachten, Spannungen so weiter reduziert.

Der Ultraschallwandler weist vorteilhaft in Ausbreitungsrichtung des Ultraschallsignals folgende Impedanzverhältnisse auf:

$$Z_{Piezoelement} > Z_{Auflagenscheibe} > Z_{Anpassungsschicht} > Z_{Koppelelement}$$

, wobei Z jeweils die Impedanz (in Rayl) des Piezoelements (2, 22), der Auflagenscheibe (4, 24), der Anpassungsschicht (36) und des Koppelelements (3, 23) darstellt. Durch diesen Impedanzgradienten werden Reflexionen von Ultraschallsignal-Anteilen vorteilhaft verhindert. Zudem ist der Ultraschallwandler unempfindlicher gegenüber Temperatureinflüssen, da in Ausbreitungsrichtung des Ultraschallsignals ein Gradient bezüglich der

Ausdehnungskoeffizienten der einzelnen Materialien vorhanden ist. Dabei treten folgende thermische Ausdehnungskoeffizienten (ppm/K) auf:

$$\text{Ausdehnungskoeff.}_{Piezoelement} < \text{Ausdehnungskoeff.}_{Auflagenscheibe} < \text{Ausdehnungskoeff.}_{Anpassungsschicht} < \text{Ausdehnungskoeff.}_{Koppelelement}$$

Die Anpassungschicht besteht insbesondere aus einem polymerisierten Kunststoff, welcher unter Wärmeeinfluss polymerisiert und welcher während der Polymerisation eine höhere Schrumpfung aufweist als die temperaturbedingte Schrumpfung des Koppelelements und nach der Polymerisation eine geringere Schrumpfung aufweist als die temperaturbedingte Schrumpfung des Koppelelements.

Die Anpassungschicht besteht vorzugsweise aus einem dauerelastischen Material mit einer Shorehärte gemäß DIN 53505 von 30-60°±5° bei 25°C. Die Rückprallelastizität beträgt vorzugsweise zwischen 20-40% (± 5%), gemäß DIN 53512 bei 25°C.

Erfindungsgemäß wird ein Ultraschallwandler in einem Ultraschall-Durchflussmessgerät eingesetzt, welches nach der Laufzeitdifferenzmethode arbeitet. Ein entsprechendes Ultraschall-Durchflussmessgerät zur Ermittlung der Durchflussgeschwindigkeit oder des Volumendurchflusses eines Messmediums mit einem Messrohr, weist hierfür zumindest zwei entlang des Messrohres angeordneten Ultraschallwandlern gemäß, Anspruch 1 auf, wobei ein jeder der Ultraschallwandler eine Kontaktfläche aufweist, an welcher ein erzeugtes Ultraschallsignal in das Messrohr oder in das Messmedium übertragen oder empfangen werden kann.

Nachfolgend wird der Gegenstand der Erfindung erläutert.

Fig. 1 Schnittansicht eines nicht zur Erfindung gehörenden Ultraschallwandlers;

Fig. 2 Perspektivansicht des ersten Ultraschallwandlers;

Fig. 3 Perspektivansicht auf ein Koppelelement eines erfindungsgemäßen Ultraschallwandlers;

Fig. 3a Teilausschnitt der Fig. 3;

Fig. 4 vordere Schnittansicht des erfindungsgemäßen Ultraschallwandlers;

Fig. 4a Teilausschnitt der Schnittansicht der Fig. 4;

Fig. 5 seitliche Schnittansicht des erfindungsgemäßen Ultraschallwandlers;

Fig. 6 Vorderansicht des Ultraschallwandlers; und

Fig. 7 Perspektivansicht des erfindungsgemäßen Ultraschallwandlers

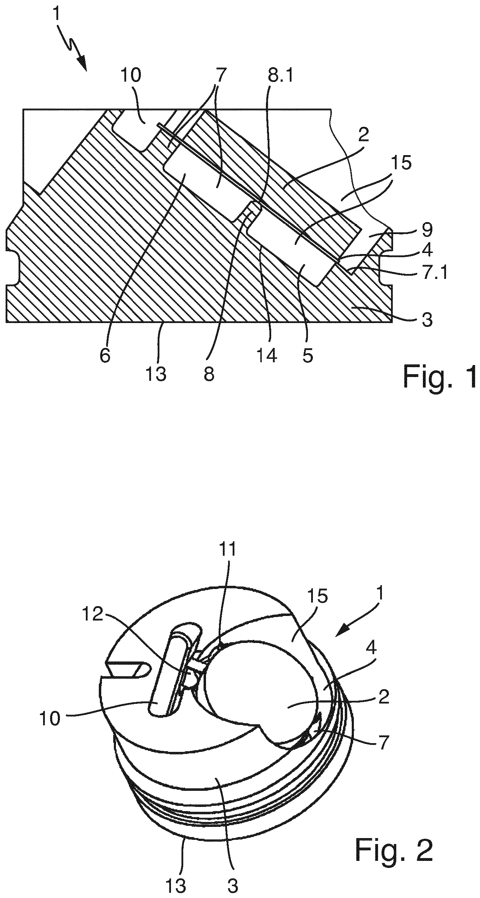

Fig. 1 zeigt einen Ultraschallwandler 1 mit einem Koppelelement 3.

Der Ultraschallwandler 1 weist eine Anordnung aus einem Piezoelement 2 und einer Auflagenscheibe 4 auf, die hier vorzugsweise eine Metallscheibe ist. Der Ultraschallwandler weist darüber hinaus ein Koppelelement 3 auf. Dieses Koppelelement 3 wird oftmals auch Koppelkörper genannt. Sehr oft sind Koppelelemente keilförmig ausgestaltet, weshalb der Fachmann von einem Koppelkeil spricht.

Auch im vorliegenden Ausführungsbeispiel ist das Koppelelement als Koppelkeil ausgestaltet. Nachfolgend soll die Form und Funktionsweise des Koppelelements näher erläutert werden.

Die Grundform des Koppelelements ist zylindrisch mit einer Mantelfläche und zwei Grundflächen. Dabei ist eine der beiden Grundflächen abgewinkelt.

Im Unterschied zu bereits bekannten Koppelelementen weist das Koppelelement eine spezielle Ausnehmung 5 in Form einer Schrägbohrung auf, in welcher das Piezoelement 2 festlegbar ist.

Die im Koppelelement 3 angeordnete Ausnehmung 5 ist im vorliegenden Ausführungsbeispiel eine zylindrische Vertiefung mit einer kreisförmigen Grundfläche 14. Je nach Form des Piezoelements sind allerdings auch andere geometrische Formen, beispielsweise quaderförmige Vertiefungen und dergleichen denkbar. Entsprechend sind die Grundflächen dieser Vertiefungen beispielsweise quadratisch oder rechteckig ausgestaltet. An der Grundfläche 14 wird der überwiegende Anteil, also mehr als 50% des vom Piezoelement erzeugten Ultraschallsignals, in das Koppelelement eingeleitet. Zugleich wird durch den Winkel der Grundfläche 14 der Eintrittswinkel in das Messmedium definiert.

Dabei weist die Ausnehmung in jedem Fall zumindest eine Grundfläche 14 auf und vorzugsweiseeine eine Randseite 15 auf, welche zumindest bereichsweise durch das Koppelelement begrenzt wird.

In die Ausnehmung ragen ausgehend von der Randseite 15 einer oder mehrere seitliche Stege 7. Diese sind für einen randseitigen Anschlag und planparallelen Beabstandung der Auflagenscheibe 4 gegenüber der Grundfläche 14 der Ausnehmung vorgesehen.

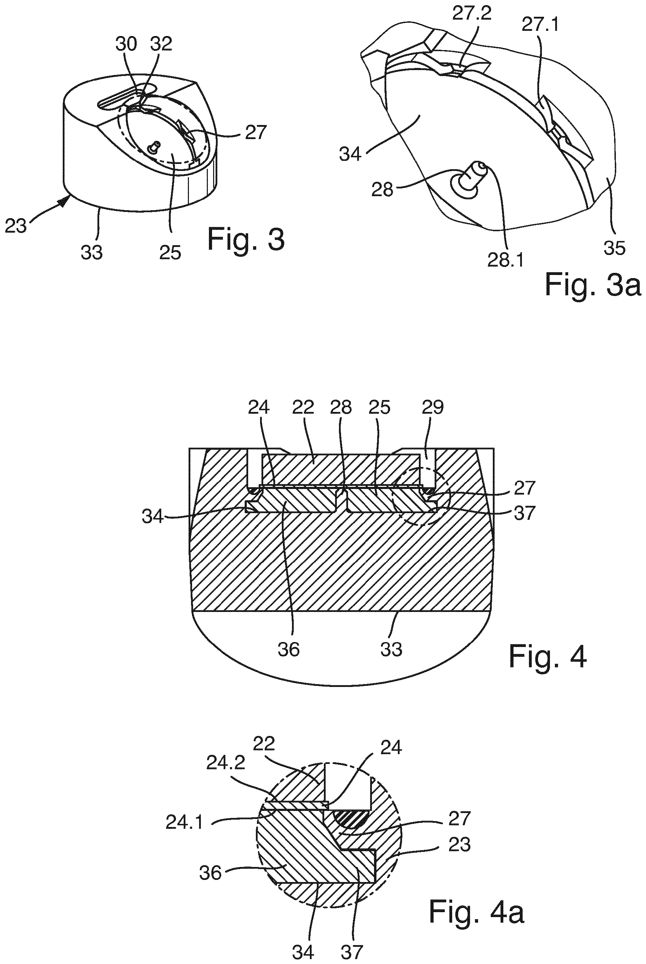

Beispielsweise kann ein umlaufender Steg 7 mit einer Anschlagsfläche 7.1 in die Ausnehmung hineinragen und den Randbereich der Auflagenscheibe 4 beabstanden. Eine derartige Variante ist in Fig. 1 dargestellt. Alternativ können auch mehrere Einzelstege 27 seitlich in die Ausnehmung hineinragen und dadurch lediglich eine punktuelle oder zumindest nur abschnittsweise umlaufende randseitige Kontaktierung der Auflagenscheibe 24 mit dem Koppelelement 23 ermöglichen. Eine derartige Variante ist in den Fig. 3-7 dargestellt.

Die Ausnehmung weist darüber hinaus weitere Mittel zur Beabstandung der Auflagenscheibe 4 in Form von Abstandshaltern 8 auf. Diese Abstandshalter 8 und deren endständige punktuelle Anschlagsfläche 8.1 ragen aus der Grundfläche 14 in die Ausnehmung 5 hinein.

Das Koppelelement weist eine Kontaktfläche 13 auf, von welcher aus das Ultraschallsignal aus dem Koppelelement austritt. Bei einem In-Line Ultraschalldurchflussmessgerät kann an dieser Kontaktfläche das Ultraschallsignal direkt in ein Messmedium überführt werden.

Wie aus Fig. 1 und 2 ersichtlich, ist die Ausnehmung 5 wesentlich größer als die Abmessungen des Piezoelements 2. Zwischen der Randseite 15 des Koppelelements 3 und dem Piezoelement ist daher eine Lücke 9 ausgebildet. Um ein Verrutschen des Piezoelements 2 in der Lücke zu vermeiden, weist die Auflagenscheibe 4 Abstandshalter 11 auf, welche ein seitliches Verschieben des Piezoelements 2 in der Ausnehmung 5 verhindern.

Das Koppelelement weist zudem eine zweite Ausnehmung 10 auf, welche über einen Überlaufkanal 12 mit der ersten Ausnehmung verbunden ist. Zur besseren Erläuterung der Funktionsweise der zweiten Ausnehmung 10 soll zunächst näher erläutert werden, wie der Ultraschallwandler 1 zusammengesetzt wird.

Zunächst wird ein zuvor beschriebenes Koppelelement 3 bereitgestellt.

Welcher eine erste Ausnehmung 5 zur Aufnahme der Auflagenscheibe 4 und des Piezoelements 2 aufweist. In die Ausnehmung 5 ragen seitlich einer oder mehrere Stege 7.

Alternativ oder zusätzlich zu dem Steg 7 oder den Stegen weist das Koppelelement 3 auch die zuvor beschriebenen Abstandshalter 8 auf, welche eine Positionierung der Auflagenscheibe 4 planparallel zur Grundfläche 14 der Ausnehmung 5 erlauben.

In die erste Ausnehmung 5 dieses Koppelelements 3 wird eine Vergussmasse eingebracht. Die Vergussmasse wurde in der Schnittansicht der Fig. 1 zur besseren Übersichtlichkeit weggelassen. Die Vergussmasse dient zur Anbindung der Auflagenscheibe an das Koppelelement. Bislang wurde für die Anbindung der Auflagenscheibe 4 ein Klebstoff genutzt. Problematisch war dabei, dass aufgrund seiner inhomogenen Verteilung die Klebstoffschicht das Ultraschallsignal in gewissem Umfang stört und ein sehr großer Übergangsbereich der akustischen Impedanzen zwischen Auflagenscheibe und Koppelelement vorlag. Eine möglichst gleichmäßig dicke Anpassungsschicht einer Vergussmasse innerhalb der ersten Ausnehmung hat diesen störenden Einfluss nicht.

Diese Schicht aus Vergussmasse soll innerhalb eines Raumes vorliegen, welcher durch die auf dem Steg oder den Stegen und/oder dem Abstandshalter oder den Abstandshaltern aufliegende Auflagenscheibe und der ersten Ausnehmung 5 definiert wird.

Damit der Übergang zwischen Vergussmasse und Auflagenscheibe möglichst luftfrei ist, wird so viel Vergussmasse in die Ausnehmung gegossen, dass das Vergussmassevolumen etwas größer ist als das eigentliche Füllvolumen des zu befüllenden Raumes.

Anschließend wird die Auflagenscheibe in die Ausnehmung gepresst, bis diese auf dem oder den Abstandshaltern und/oder dem oder den Stegen aufliegt. Dabei wird das überschüssige Volumen an Vergussmasse in den seitlichen Überlaufkanal 12 und von dort in die zweite Ausnehmung 10 geleitet. Diese zweite Ausnehmung 10 dient somit lediglich als Auffangbehältnis für Vergussmasse, welche beim Anpressen der Auflagenscheibe 4 seitlich weggedrückt wurde.

Nach dieser Positionierung der Auflagenscheibe 4 in der ersten Ausnehmung 5 des Koppelelements 3 wird das Piezoelement 2 auf die Auflagenscheibe aufgesetzt. Dabei stehen in Richtung des Piezoelements Abstandshalter 11 aus der Auflagenscheibe 4 hervor, welche das Piezoelement gegen seitliches Verrutschen sichern.

Das vorbeschriebene Verfahren stellt nur eine bevorzugte Möglichkeit der Konstruktion des erfindungsgemäßen Ultraschallwandlers 1 dar. Dabei kann der Ultraschallwandler in einem Arbeitsgang hergestellt werden, ohne dass das Koppelelement aus einer fixierenden Halterung um- oder ausgespannt werden muss.

Es ist alternativ jedoch beispielsweise auch möglich randseitig einen Einführkanal - vorzugsweise gegenüber dem Überlaufkanal 12 - anzuordnen und die Vergussmasse in den Raum 6 zwischen der Auflagenscheibe 4 und der Grundfläche 14 der ersten Ausnehmung 5 zumindest so lange einzuspritzen, bis Vergussmasse durch den Überlaufkanal 12 austritt.

Fig. 3-7 zeigen die Ausgestaltung eines erfindungsgemäßen Koppelelements 23 und eines Ultraschallwandlers 21 mit einer Auflagenscheibe 24 und einem Piezoelement 22. Wie aus Fig. 3 ersichtlich weist auch dieses Koppelelement 23 eine erste Ausnehmung 25 mit einer Grundfläche 34 auf, welche in das Koppelelement eingebracht, beispielsweise eingefräst ist. Die Grundfläche 34 ist auch in diesem Fall die Fläche an welcher das Ultraschallsignal des Piezoelements 22 in das Koppelelement 23 eintritt.

Anders als in Fig 1 & 2 weist das Koppelelement in diesem Fall mehrere Stege 27 auf, welche jeweils sehr kleinflächige Anschlagflächen 27.1 in Form von Balkonen für die Auflage bzw. den Anschlag der Auflagenscheibe 24 aufweisen. Die Stege 27 weisen zudem Stegarme 27.2 auf, welche aus der Randseite 35 der ersten Ausnehmung 25 hervorstehen. Zentral aus der Grundfläche 34 steht zusätzlich ein stiftförmiger Abstandshalter 28 mit einer endständigen punktuellen Anschlagsfläche 28.1 hervor. Die zentrale Position für einen Abstandshalter ist zwar bevorzugt, ist jedoch nicht zwingend vorgeschrieben. Die endständige Anschlagfläche des Abstandshalters 28 und die Anschlagflächen 27.1 der Stege 27 sind alle auf einer Ebene angeordnet, die parallel zur Grundfläche 34 der Ausnehmung 25 verläuft.

Wie schon im vorhergehenden Beispiel in Fig. 2 ist auch beim Koppelelement 23 der Fig. 3-7 eine zweite Ausnehmung 30 und ein Überlaufkanal 32 vorgesehen, welche ein Überschussvolumen einer bei der Herstellung in die erste Ausnehmung 25 eingebrachten Vergussmasse aufnehmen soll.

Fig. 4-7 zeigt den Ultraschallwandler im montierten Zustand. In diesen Figuren ist der zwischen der Auflagenscheibe 24 und der Grundfläche 34 befindliche Raum der ersten Ausnehmung mit Vergussmasse 36 angefüllt.

Das Koppelelement 23 ist ebenfalls keilförmig aufgebaut. Es weist eine Koppelfläche 33 aus, an welcher das Ultraschallsignal idealerweise das Koppelelement 23 verlässt.

Auch in dieser Ausführungsvariante liegt das Piezoelement 22 randseitig nicht am Koppelelement 23 an sondern ist durch eine Lücke 29 von diesem beabstandet.

Die randseitigen Stege 27 weisen einen sogenannten Hinterstich 37 in Richtung der Grundfläche 34 auf. Dieser Hinterstich ist ebenfalls mit Vergussmasse ausgefüllt. Da Vergussmassen üblicherweise keine ausgeprägten haftvermittelnden Eigenschaften besitzen, ermöglicht der Hinterstich 37 eine bessere Verankerung der Vergussmasse 36 in der Ausnehmung 25.

Alternativ kann auch die Oberfläche der Grundfläche und der Randseite der ersten Ausnehmung erhöht werden. Dies geschieht beispielsweise Bearbeitungsgänge wie Prägen, Spritzen, Sandstrahlen, Anätzen, Drehen, Fräsen oder Bohren um das Anhaften der darauf aufgebrachten Vergussmasse zu erhöhen.

Bei Vergussmassen, welche verstärkt einem Schrumpfungsvorgang unterliegen ermöglicht der Hinterstich zudem ein gleichmäßiges Schrumpfen der Vergussmasse von oben nach unten und nicht zum Zentrum hin.

Die Auflagenscheibe 24 weist eine zum Koppelelement 23 gerichtete Unterseite 24.1 und eine zum Piezoelement gerichtete Oberseite 24.2 auf. Die Unterseite ist dabei vorzugsweise blasenfrei mit der Vergussmasse kontaktiert und liegt seitlich auf den Anschlagflächen 27.2 der Stege 27 auf.

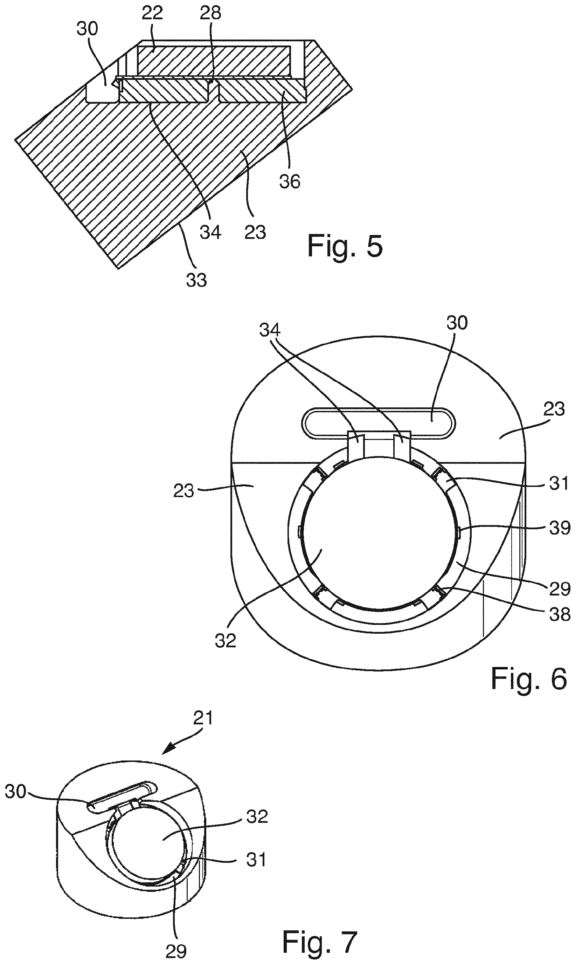

Anhand von Fig. 6 wird die Auflage und Halterung des Piezoelements 22 auf der Auflagenscheibe 24 nochmals verdeutlicht. Die Abstandshalter 31, dienen zur Ausnehmung und zur Sicherung des Piezoelements 22 gegen seitliches Verrutschen innerhalb der Ausnehmung 25. Die Abstandshalter 31 weisen dabei abgewinkelte Blechsegmente auf, welche die gleiche Breite aufweisen wie die Lücke 29 zwischen dem Piezoelement 22 und dem Koppelkörper 23 und sich gegen die Randseite 35 des Koppelelements 23 und gegen das Piezoelement 22 aufstützen. Die Auflagenscheibe 24 weist darüber hinaus weitere Halteelemente 39 auf.

Die drei Blechsegmente der Auflagenscheibe 24 sind um jeweils ca. 120° gegeneinander versetzte und selbstzentrierend bezüglich der Ausnehmung 25 ausgebildet. Ferner weist die Auflagenscheibe 24 drei der zuvor erwähnten Halteelemente 39 auf, die um jeweils ca. 120° gegeneinander versetzt sind und das Piezoelement 22 ebenfalls zentrieren. Die Halteelemente 39 und die Blechsegmente sind aus der Ebene der Auflagenscheibe 24 herausgebogen.

Das Koppelelement 3, 23 kann aus einem hochtemperatur-thermoplastischen Material bestehen, wie z.B. einem unverfüllten Polyetherimid (PEI), wie es unter dem Handelsnamen Ultem 1000 erhältlich ist.

Wie in Fig. 1 sichtbar kann das Koppelelement 3 an seinem Außenumfang eine Ringnut zur Ausnehmung eines O-Rings aufweisen, um den Ultraschallwandler 1 in einer Bohrung eines Behälters oder eines Messrohres eines Durchflussmessgerätes dicht zu fixieren.

Der Ultraschallwandler 1, 21 kann, wie eingangs bereits erwähnt, z.B. in ein Messrohr eines Ultraschall-Durchflussmessers eingesetzt werden, in dem ein Messmedium (Pulver, Flüssigkeit, Gas, Dampf) fliesst, dessen Volumendurchfluss und/oder Strömungsgeschwindigkeit gemessen werden soll/sollen. Dabei werden zwei Ultraschallwandler beabstandet voneinander ins Messrohr eingesetzt, aufgesetzt oder aufgeschnallt und abwechselnd als Ultraschallsender bzw. Ultraschallempfänger geschalten.

Aus z.B. der Laufzeit-Differenz der gesendeten Signale lassen sich die Strömungsgeschwindigkeit und/oder der Volumendurchfluss nach an sich bekannten Verfahren elektronisch ermitteln.

Das Piezoelement 2, 22 kann scheibenförmig ausgebildet sein und besteht vorzugsweise aus einem keramischen piezoelektrischen Material, wie z.B. aus einer PZT-5-Standard-Soft-Keramik. Die Dicke der Auflagenscheibe 4 ist bevorzugt höchstens gleich einem Viertel der Wellenlänge, die das vom Piezoelement ausgesandte Ultraschallsignal in der Auflagenscheibe 4 hat. Diese besteht bevorzugt aus Rein-Aluminium. Sie kann aber auch z.B. aus Titan, Edelstahl, Messing oder Blei bestehen oder Legierungen bestehen.

Als Vergussmasse eignen sich besonders insbesondere flüssig-aushärtende Epoxidharze. Speziell kann ein mit Aluminiumoxid-hochgefüllter Epoxidharz genutzt werden mit mehr als 50Gew.% Aluminiumoxidanteile, insbesondere 70-80 Gew,%. Ebenfalls sind Schmelzen denkbar, die bei gegenüber der Betriebstemperatur erhöhter Temperatur des Sensors eingebracht werden und sich verfestigen. Oder mit, gegenüber der Wellenlänge, kleinen Partikeln gemischten dauerelastischen Vergussmasse besteht. Dies reduziert zusätzlich die thermischen Spannungen.

Die Abfolge der einzelnen Schichten und Bauelemente ergibt sich für das Ultraschallsignal bis zum Austritt aus dem Ultraschallwandler ein Impedanzgradient. Die Impedanzen der jeweiligen Schichten und Bauelemente des Ultraschallwandlers sind in MKS Einheiten angegeben und betragen wie folgt:

- Piezoelement: Z = 18-30 MRayl;
- Auflagenscheibe (Aluminiumscheibe):Z= kleiner als 18 MRayl, insbesondere 10-17 MRayl; Alternativ zur Aluminiumscheibe z.B. Glas, Keramik oder Glaskeramik Z = 10 ..18 MRayl oder Magnesiumscheibe,
- Anpassungsschicht bzw. Vergussmasse (Epoxidhalz mit $Al_2O_3$ gefüllt): 5-9 MRayl, insbesondere 6,5-7,5 MRayl;
- Koppelelement aus PEI: kleiner als 4 MRayl, insbesondere 2,5-3,5 MRayl.

Aufgrund der angepassteren Impedanzübergänge kann vorteilhaft eine bessere Signalstärke des Ultraschallsignals erreicht werden.

Zudem ergibt sich durch die Schichtfolge auch ein Gradient bezüglich des thermischen Ausdehnungskoeffizienten in der Abfolge der Bauteile, wodurch der Ultraschallwandler auch in eine verbesserte Temperaturwechselbeständigkeit aushält und somit für Messungen in größeren Temperaturbereichen eingesetzt werden kann, ohne dass die Materialschichten hohen Zug- und Scherspannungen ausgesetzt sind.

Die Schrumpfung des Koppelelements beträgt dabei zwischen 45-80 ppm/K, vorzugsweise zwischen 50-70 ppm/K. Die Schrumpfung der Anpassungsschicht aus Vergussmasse beträgt 20-40 ppm/K, vorzugsweise 25-35 ppm/K. Die Schrumpfung der Auflagenscheibe beträgt 10-20 ppm/K. Die Schrumpfung des Piezoelements beträgt weniger als 10 ppm, vorzugsweise 4-6 ppm/K.

Im Rahmen der vorliegenden Erfindung sind sowohl einer oder mehrere in die Ausnehmung 5, 25 seitlich hineinragende Stege 7, 27 als auch aus der Grundfläche 14, 34 herausragende Abstandshalter 8, 28 als Anschläge zu verstehen, deren Anschlagsflächen in einer Ebene parallel zur Grundfläche 14, 34 der ersten Ausnehmung liegen.

Dadurch kann die Auflagenscheibe oder in einem weitaus weniger bevorzugten Fall auch das Piezoelement direkt parallel zur Grundfläche 14, 34 der ersten Ausnehmung ausgerichtet werden.

**Patentansprüche**

1. Ultraschallwandler (1, 21) umfassend ein Koppelelement (3, 23), welches Koppelelement (3, 23) eine erste Ausnehmung (5, 25) aufweist,
   wobei in der ersten Ausnehmung (5, 25) ein Piezoelement (2, 22) angeordnet ist,
   wobei die erste Ausnehmung (5, 25) eine endständige Grundfläche (14, 34) aufweist, in welche ein durch das Piezoelement (2, 22) erzeugtes Ultraschallsignal in das Koppelelement (3, 23) einleitbar ist, und wobei das Koppelelement innerhalb der Ausnehmung (5, 25) einen oder mehrere Anschläge (7, 27, 8, 28) aufweist, welche jeweils zumindest eine Anschlagsfläche (7.1, 27.1, 8.1, 28.1) aufweisen, die sich entlang einer Ebene erstreckt, wobei die Ebene parallel zur Grundfläche (14, 34) der ersten Ausnehmung (5, 25) verläuft und zwischen dieser Ebene und der Grundfläche (14, 34) ein Raum (6, 36) definiert ist, zur Aufnahme von Material für eine akustische Anpassungsschicht,
   wobei in der ersten Ausnehmung eine Auflagenscheibe (4) angeordnet ist, auf deren vom Koppelelement weggerichteten Oberseite das Piezoelement angeordnet ist;
   wobei die Auflagenscheibe (4) und die Grundfläche (14, 34) einen Raum begrenzen, in welchem eine Anpassungsschicht angeordnet ist, wobei die Auflagenscheibe vorgesehen ist zur Verminderung von thermischen Spannungen am Piezoelement,

**dadurch gekennzeichnet, dass** der mindestens eine Anschlag (7) als zumindest ein Steg (7) ausgebildet ist, welcher randseitig in die erste Ausnehmung (5) hineinragt, wobei der zumindest eine Steg (7, 27) einen Hinterstich (37) aufweist.

2. Ultraschallwandler nach Anspruch 1, **dadurch gekennzeichnet, dass** die Anpassungsschicht eine λ/4-Anpassungsschicht (±25% dieses Wertes) ist.

3. Ultraschallwandler nach einem der vorhergehenden Ansprüche, **dadurch gekennzeichnet, dass** das Koppelelement eine zweite Ausnehmung (10, 30) aufweist, welche über einen Überlaufkanal mit der ersten Ausnehmung verbunden ist, wobei der Überlaufkanal dazu eingerichtet ist, überschüssige Vergussmasse der Anpassungsschicht in die zweite Ausnehmung zu überführen.

4. Ultraschallwandler nach einem der vorhergehenden Ansprüche, **dadurch gekennzeichnet, dass** die mehreren Anschläge (27) als eine Mehrzahl von Stegen (27) ausgebildet sind, welche randseitig in die erste Ausnehmung (25) hineinragen und deren Anschlagsflächen (27.1) in der Ebene liegen.

5. Ultraschallwandler nach einem der vorhergehenden Ansprüche, **dadurch gekennzeichnet, dass** der Anschlag (8, 28) als einer oder mehrere Abstandshalter ausgebildet sind, welche aus der Grundfläche (14, 34) der ersten Ausnehmung (5, 25) hervorstehen.

6. Ultraschallwandler nach einem der vorhergehenden Ansprüche, **dadurch gekennzeichnet, dass** der oder die Anschläge integraler Bestandteil des Koppelelements sind.

7. Ultraschallwandler nach einem der vorhergehenden Ansprüche, **dadurch gekennzeichnet, dass** der Ultraschallwandler in Ausbreitungsrichtung des Ultraschallsignals folgende Impedanzverhältnisse aufweist:

$$Z_{Piezoelement} > Z_{Auflagenscheibe} > Z_{Anpassungsschicht} > Z_{Koppelelement}$$

, wobei Z jeweiles die Impedanz (in Rayl) des Piezoelements (2, 22), der Auflagenscheibe (4, 24), der Anpassungsschicht (36) und des Koppelelements (3, 23) darstellt.

8. Ultraschallwandler nach einem der vorhergehenden Ansprüche, **dadurch gekennzeichnet, dass** der Ultraschallwandler in Ausbreitungsrichtung des Ultraschallsignals einen Gradienten des thermischen Ausdehnungskoeffizienten (ppm/K) aufweist:

$$\text{Ausdehnungskoeff}_{Piezoelement} < \text{Ausdehnungskoeff}_{Auflagenscheibe} < \text{Ausdehnungskoeff}_{Anpassungsschicht}$$
$$< \text{Ausdehnungskoeff}_{Koppelelement}$$

9. Ultraschallwandler nach einem der vorhergehenden Ansprüche, **dadurch gekennzeichnet, dass** die Anpassungsschicht aus einem polymerisierten Kunststoff besteht, welcher unter Wärmeeinfluss polymerisiert und welcher während der Polymerisation eine höhere Schrumpfung aufweist als die temperaturbedingte Schrumpfung des Koppelelements und nach der Polymerisation eine geringere Schrumpfung aufweist als die temperaturbedingte Schrumpfung des Koppelelements.

10. Ultraschallwandler nach einem der vorhergehenden Ansprüche, **dadurch gekennzeichnet, dass** die Anpassungsschicht aus einem dauerelastischen Material mit einer Shorehärte gemäß DIN 53505 von 30-60°±5° bei 25°C besteht.

11. Ultraschall-Durchflussmessgerät zur Ermittlung der Durchflussgeschwindigkeit oder des Volumendurchflusses eines Messmediums mit einem Messrohr und zumindest zwei entlang des Messrohres angeordneten Ultraschallwandlern (1, 21) gemäß Anspruch 1, wobei ein jeder der Ultraschallwandler (1, 21) das Koppelelement (3, 23) mit einer Kontaktfläche (13, 33) aufweist, an welcher ein erzeugtes Ultraschallsignal in das Messrohr oder in das Messmedium übertragen oder empfangen werden kann.

**Claims**

1. Ultrasonic transducer (1, 21) comprising a coupling element (3, 23), said coupling element (3, 23) having a first recess (5, 25),
   wherein a piezoelectric element (2, 22) is arranged in the first recess (5, 25), wherein the first recess (5, 25) has a terminal base area (14, 34) in which an ultrasonic signal generated by the piezoelectric element (2, 22) can be introduced into the coupling element (3, 23), and wherein the coupling element has one or more limit stops (7, 27, 8, 28) within the recess (5, 25), said stops each having at least a limit stop surface (7.1, 27.1, 8.1, 28.1), which extends along a plane, wherein said plane is parallel to the base area (14, 34) of the first recess (5, 25) and defines a space (6,36) between this plane and the base area (14, 34), said space serving to receive material for an acoustic adaptation layer,
   wherein a support disc (4) is arranged in the first recess, the piezoelectric element being arranged on the top side of the disc facing away from the coupling element; wherein the support disc (4) and the base area (14, 34) delimit a space in which an adaptation layer is arranged, wherein the support disc is provided to reduce thermal stress on the piezoelectric element,
   **characterized in that** the at least one limit stop (7) is formed as at least a bar (7), said bar projecting into the first recess (5) at the edge, wherein the at least one bar (7, 27) has a back cut (37).

2. Ultrasonic transducer as claimed in Claim 1, **characterized in that** the adaptation layer is a $\lambda/4$ adaptation layer ($\pm 25$ % of this value).

3. Ultrasonic transducer as claimed in one of the previous claims, **characterized in that** the coupling element has a second recess (10, 30), which is connected to the first recess via an overflow channel, wherein the overflow channel is designed to transfer excess potting compound of the adaptation layer to the second recess.

4. Ultrasonic transducer as claimed in one of the previous claims, **characterized in that** the multiple limit stops (27) are designed as a plurality of bars (27) which project, at the edge, into the first recess (25) and whose limit stop surfaces (27.1) are located on the plane.

5. Ultrasonic transducer as claimed in one of the previous claims, **characterized in that** the limit stop (8, 28) is formed as one or more spacers that project out of the base area (14, 34) of the first recess (5, 25).

6. Ultrasonic transducer as claimed in one of the previous claims, **characterized in that** the limit stop(s) is/are an integral part of the coupling element.

7. Ultrasonic transducer as claimed in one of the previous claims, **characterized in that** the ultrasonic transducer has the following impedance ratios in the direction of propagation of the ultrasonic signal:

$$Z_{\text{piezoelectric element}} > Z_{\text{support disc}} > Z_{\text{adaptation layer}} > Z_{\text{coupling element}}$$

   where Z is the impedance (in rayl) of the piezoelectric element (2, 22), the support disc (4, 24), the adaptation layer (36) and the coupling element (3, 23).

8. Ultrasonic transducer as claimed in one of the previous claims, **characterized in that** the ultrasonic transducer has a gradient of the thermal expansion coefficient (ppm/K) in the direction of propagation of the ultrasonic signal:

$$\text{expansion coefficient}_{\text{piezoelectric element}} < \text{expansion coefficient}_{\text{support disc}} < \text{expansion coefficient}_{\text{adaptation layer}} < \text{expansion coefficient}_{\text{coupling element}}$$

9. Ultrasonic transducer as claimed in one of the previous claims, **characterized in that** the adaptation layer is made from a polymerized plastic which polymerizes under the influence of heat and which exhibits more shrinking than the temperature-related shrinkage of the coupling element during the polymerization process and, after polymerization, exhibits less shrinkage than the temperature-related shrinking of the coupling element.

10. Ultrasonic transducer as claimed in one of the previous claims, **characterized in that** the adaptation layer is made from a permanently elastic material with a Shore hardness according to DIN 53505 of 30-60°±5° at 25 °C.

11. Ultrasonic flowmeter to determine the flow velocity or the volume flow of a medium to be measured with a measuring tube and at least two ultrasonic transducers (1, 21) as claimed in Claim 1 which are arranged along the measuring tube, wherein each of the ultrasonic transducers (1, 21) features the coupling element (3, 23) with a contact surface (13, 33) at which a generated ultrasonic signal can be transmitted to the measuring tube or the medium to be measured or can be received.

**Revendications**

1. Convertisseur à ultrasons (1, 21) comprenant un élément de couplage (3, 23), lequel élément de couplage (3, 23) présente un premier évidement (5, 25),
un élément piézoélectrique (2, 22) étant disposé dans le premier évidement (5, 25),
le premier évidement (5, 25) présentant une surface de base terminale (14, 34), dans laquelle un signal ultrasonore généré par l'élément piézoélectrique (2, 22) peut être introduit dans l'élément de couplage (3, 23), et l'élément de couplage présentant à l'intérieur de l'évidement (5, 25) une ou plusieurs butées (7, 27, 8, 28), lesquelles présentent chacune au moins une surface de butée (7.1, 27.1, 8.1, 28.1), laquelle surface s'étend le long d'un plan, le plan étant parallèle à la surface de base (14, 34) du premier évidement (5, 25) et un espace (6,36) étant défini entre ce plan et la surface de base (14, 34), lequel espace sert à la réception du matériau pour une couche d'adaptation acoustique,
un disque d'appui (4) étant disposé dans le premier évidement, l'élément piézoélectrique étant disposé sur la face supérieure du disque détournée de l'élément de couplage ;
le disque d'appui (4) et la surface de base (14, 34) délimitant un espace, dans lequel une couche d'adaptation est disposée, le disque d'appui étant prévu pour réduire les tensions thermiques sur l'élément piézoélectrique,
**caractérisé en ce que** l'au moins une butée (7) est formée en tant qu'au moins un méplat (7), lequel méplat s'étend en bordure dans le premier évidement (5), l'au moins un méplat (7, 27) présentant une dépouille (37).

2. Convertisseur à ultrasons selon la revendication 1, **caractérisé en ce que** la couche d'adaptation est une couche d'adaptation λ/4 (±25 % de cette valeur).

3. Convertisseur à ultrasons selon l'une des revendications précédentes, **caractérisé en ce que** l'élément de couplage présente un deuxième évidement (10, 30), lequel est relié par l'intermédiaire d'un canal de trop-plein avec le premier évidement, le canal de trop-plein étant conçu de telle sorte à acheminer dans le deuxième évidement le produit de surmoulage de la couche d'adaptation.

4. Convertisseur à ultrasons selon l'une des revendications précédentes, **caractérisé en ce que** la pluralité de butées (27) est formée en tant que pluralité de méplats (27), lesquels s'étendent en bordure dans le premier évidement (25) et dont les surfaces de butée (27.1) se trouvent dans le plan.

5. Convertisseur à ultrasons selon l'une des revendications précédentes, **caractérisé en ce que** la butée (8, 28) est formée en tant qu'une ou plusieurs entretoises, lesquelles font saillie à la surface de base (14, 34) du premier évidement (5, 25).

6. Convertisseur à ultrasons selon l'une des revendications précédentes, **caractérisé en ce que** la ou les butées font partie intégrante de l'élément de couplage.

7. Convertisseur à ultrasons selon l'une des revendications précédentes, **caractérisé en ce que** le convertisseur à ultrasons présente dans la direction de propagation du signal ultrasonore les rapports d'impédance suivants :

$$Z_{\text{élément piézoélectrique}} > Z_{\text{disque d'appui}} > Z_{\text{couche d'adaptation}} > Z_{\text{élément de couplage}}$$

où Z est respectivement l'impédance (en rayl) de l'élément piézoélectrique (2, 22), du disque d'appui (4, 24), de la couche d'adaptation (36) et de l'élément de couplage (3, 23).

8. Convertisseur à ultrasons selon l'une des revendications précédentes, **caractérisé en ce que** le convertisseur à ultrasons présente dans la direction de propagation du signal ultrasonore un gradient du coefficient de dilatation thermique (ppm/K) :

$$\text{Coeff. de dilatation}_{\text{élément piézoélectrique}} < \text{Coeff. de dilatation}_{\text{disque d'appui}} < \text{Coeff. de dilatation}_{\text{couche d'adaptation}} < \text{Coeff. de dilatation}_{\text{élément de couplage}}$$

9. Convertisseur à ultrasons selon l'une des revendications précédentes, **caractérisé en ce que** la couche d'adaptation est constituée d'un plastique polymérisé, lequel est polymérisé sous l'influence de la chaleur et lequel présente pendant la polymérisation une rétraction supérieure à la rétraction due à la température de l'élément de couplage et, après la polymérisation, présente une rétraction inférieure à la rétraction due à la température de l'élément de couplage.

10. Convertisseur à ultrasons selon l'une des revendications précédentes, **caractérisé en ce que** la couche d'adaptation est constituée d'un matériau durablement élastique avec une dureté Shore selon DIN 53505 de 30-60°±5° à 25 °C.

11. Débitmètre à ultrasons destiné à la détermination de la vitesse d'écoulement ou du débit volumique d'un produit mesuré, avec un tube de mesure et au moins deux convertisseurs à ultrasons (1, 21) selon la revendication 1, lesquels convertisseurs sont disposés le long du tube de mesure, chacun des convertisseurs à ultrasons (1, 21) comportant l'élément de couplage (3, 23) avec une surface de contact (3, 13), au niveau de laquelle un signal ultrasonore généré peut être transmis ou reçu dans le tube de mesure ou dans le produit mesuré.

Fig. 1

Fig. 2

**Fig. 3**

**Fig. 3a**

**Fig. 4**

**Fig. 4a**

Fig. 5

Fig. 6

Fig. 7

EP 2 992 302 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0974814 B1
- DE 4230773 C1
- DE 102011079250 A1